# EUROPEAN PATENT APPLICATION

(11) **EP 2 717 535 A1**
(43) Date of publication of application: **09.04.2014**
(21) Application number: 12187171.9
(22) Date of filing: 04.10.2012
(51) Int. Cl.: H04L 29/06

(54) **Proximity-based, temporally-limited one-to-many and one-to-one hyperlocal messaging of location- and semantically-aware content objects between internet-enabled devices**

(71) Applicant: AmeoLabs S.à.r.l., 2180 Luxembourg (LU)
(72) Inventor: Thistoll, Paul, 1331 Luxembourg (LU); Vecsei, Bertalan, 1121 Budapest (HU)
(74) Representative: Dennemeyer & Associates S.A.

(57) **Abstract**

System and method for enabling proximity-based, temporally-limited broadcasting (one-to-many) and direct (one-to-one) hyperlocal messaging of semantically-aware content for both fixed and mobile internet-enabled, location-aware computing devices in which internet-enabled devices are able to send broadcasts or individually directed messages containing semantically aware content and where the messages are able to be received only by users of the same system within a certain proximate temporal and spatial area to the sending device. By means of assigning each content object a valid reception area and an associated time validity the platform enforces that the combination of the temporal and spatial area variables results in a hyperlocal messaging thus any particular content has the property that it can only be seen within a certain hyperlocal area. Furthermore each transmitted content object has a semantic categorisation. The system platform can also perform semantic introspection on all the content objects within a hyperlocal area and via means of a rule set create new content objects for broadcast that have utility to the users of that hyperlocal space.

## Description

### Field of the invention

**1.** The present invention lies in the area of the provision of a communication platform applicable for the sending and receiving of hyperlocal content between internet-enabled devices. More specifically the present invention relates to the system and method of a communication platform that allows internet-enabled devices to communicate with each other by the broadcasting (one-to-many) or sending (one-to-one) of semantically-aware content objects where the objects are only able to be received by devices within a restricted physical space proximate to the sender and during a particular time interval. The restriction of the content objects to a particular time and location has the technical effect of creating a hyperlocal zone, which, in conjunction with the semantic categorisation of the content objects creates a platform that can meaningfully curate hyperlocal content. The content objects can be such things as a body of text with a title field, rich media content, documents or executable code - anything which can be encapsulated in a data payload (the above list is non-exhaustive). Each content object has a simple or complex semantic classification which is either user- or system-generated. Furthermore, the present invention allows the platform to combine or modify content objects in specific ways to further enhance their value as hyperlocal communications.

### Background of the Invention

**2.** At the end of 2011 there were over 1.1 Billion mobile subscribers that had a 3G (or faster) data capable mobile connection and there are more mobile users worldwide that have data capability but at slower speeds. By the end of the first quarter of 2012 mobile devices accounted for 10 percent of the total amount of global internet traffic generated (according to StatCounter Global Stats - a research service.)

**3.** A considerable number of those inherently mobile internet-connected devices such as smartphones and tablets have the ability to give the position of the device using an absolute positioning method - most often the satellite based Global Positioning System (GPS). Competing services to the GPS network are also under construction.

**4.** In addition a number of internet-based applications and services also use network based data gained from the mobile network or WiFi network to which a mobile device is connected in order to localise the device before the GPS data is fully known, or where the GPS data is not available.

**5.** Also, recently some large internet companies have started providing indoor maps of spaces such as convention centres, hospitals and buildings so that users of smart mobile devices can use maps indoors (using a combination of positioning methods - absolute, relative and by employing the device's accelerometer and gyroscope).

**6.** In addition mobile phones, tablets and other internet-enabled mobile computing devices contain sophisticated platforms for the deployment of applications and services that execute on the device, not just the means to access the World Wide Web via an in-built browser. Such applications and services are sometimes stand-alone but often make use of centralised server functionality and/or multiple web services from different providers.

**7.** New smart devices with ever increasing functionality and specifications are constantly launching. The increasing central processing unit (CPU) speed, graphical processing unit (GPU) power, satellite-based global positioning system accuracy, in-built accelerometer sensitivity and in-built gyroscope accuracy in conjunction with faster data rates and ever lowering bandwidth cost means that more functionality can be devolved to the smartphone or tablet like device.

**8.** In particular, there are two areas where this improved computing power on the device side can translate into until-recently unavailable functionality: deploying complicated computer modules like semantic analyser engines on the device (not server-side) and deploying sophisticated user-interfaces that require a great deal of graphical processing power. Examples of such sophisticated always dynamic user-interfaces are found in augmented reality applications for smart devices.

**9.** Along with improved raw computing and graphical performance the location data from smart devices has become increasingly reliable and accurate. Social network, photo- and video-sharing, dating and micro-blogging applications make extensive use of this location data in their services. Many social networks such as Facebook and Foursquare allow users to 'check-in' at particular locations. Almost all photo sharing services allow users to curate and display their photos according to the location at which they were taken. Micro-blogging services such as Twitter allow users to attach absolute location data to their micro broadcasts which can be seen by other users of the service (even those not proximate to the broadcaster). Users of dating applications, for example Grindr, can send their location to a fellow user if they so desire. These are all examples of location-based services, but not necessarily of hyperlocal services. For instance, the broadcasting of a user's microblog entry to their followers with an associated location (the location of sending) attached is not a hyperlocal broadcast if none of their followers are in a proximate geographic area.

**10.** Recently a number of social network hyperlocal discovery applications have also been developed - the application Sonar is a paradigmatic example. These applications show to a user fellow users of a particular social network who are hyperlocal to that user. If desired, users can message each other, but the initial discovery is dependent on users belonging to the same social network and having tightly adjacent or nearly adjacent friend graphs. The hyperlocal context can only be established if two people had some other previously existing non-hyperlocal relationship.

**11.**The existing social network hyperlocal discovery applications have a number of drawbacks and limitations: messages (usually messages or static media files - no other kinds of content objects are possible) can only be sent and received to other users in the same location if you have pre-existing adjacent friend graphs, the possibility of one-to-many broadcasting is not available, neither is the possibility of anonymous (or quasi-anonymous) broadcasting. Also, the ability to place semantically categorised (metadata-tagged) content objects that are available to all users within a particular geographic area during a particular time period does not exist and it is not possible to send a content object broadcast that is able to be semantically categorised by the system within a short enough period of time to be useful to all the recipient users. In addition the ability to customise the client application to filter message objects by semantic categorisation does not exist.

**12.**The proposed invention combines the increasing ubiquity of internet-enabled location-aware mobile devices with advances in both mobile application platforms and mobile computing power to provide a universal location and semantically-aware content object messaging platform aimed at delivering hyperlocal content. This content can be anything from simple messages to rich media to executable code.

**13.**Hyperlocal content has two major dimensions: geography and time. Hyperlocal content is aimed at, or consumed by people, devices and/or entities that are located within a well-defined area on the scale of a room, set of offices, building, street, complex of buildings, stadium, train, aeroplane, cruise ship, neighbourhood, community, commune, county, natural geographic feature (like a mountain), large rural area, town, city or region (this list is non-exhaustive).

**14.**Similarly, hyperlocal content must also be relevant in time. The timescale during which content has hyperlocal relevance is highly dependent on the nature of the content and the nature of the proximate geographical area. Hyperlocal content could be relevant at a particular geographical area for a very short time as in the example: 'The train is leaving in two minutes', or for a longer time as in the example 'Laundry detergent is discounted all week', or for a very long time as in this example: 'Highway exit twenty four is closed for twelve months for construction work'.

**15.**The consumer of content in a hyperlocal setting evaluates the relevance or value of the content along these two dimensions of geography and time. The higher the content scores along these two dimensions the more likely it is to be pertinent or of utility to the individual, and the less likely it is to be pertinent to the general population.

**16.**One approach to the problem of distributing hyperlocal content has been to attach hashtags ***within*** the body of a short form message and allow users to search those hashtags - this is the method used by the micro-blogging service Twitter. There are three main problems with using this method for hyperlocal communication: one has to know in advance the hashtag for a particular event/location/happening (this is a non-exhaustive list of things), the messages persist and create informational noise within the global system and users beyond your proximate geographic area can read those messages.

**17.**Providing a platform for proximity-based, temporally-limited one-to-many and one-to-one hyperlocal communication of location- and semantically-aware content objects between internet-enabled devices is also an important part of providing the infrastructure of a semantic web.

**18.**The semantic web is an environment where information can be readily interpreted by machines, so machines can perform more of the work involved in finding, combining, and acting upon information on the web.

**19.**The semantic web is a system that enables machines to understand and respond to complex human requests based on their meaning. The possibility of such an understanding requires that the relevant information sources be semantically structured. In a semantic World Wide Web computing devices have the capability to analyse all the data on the web - content, links and transactions between people and computers.

**20.**A semantic web does not yet exist, but once it exists "the day-to-day mechanisms of trade, bureaucracy and our daily lives will be handled by machines talking to machines. The "intelligent agents" people have touted for ages will finally materialise." (Sir Tim Berners-Lee, "Weaving the Web", 1999)

**21.**The present invention being a platform for proximity-based, temporally-limited one-to-many and one-to-one hyperlocal communication of location- and semantically-aware content objects between internet-enabled devices will be able to be used to conduct many of the transactions that such intelligent-agents might undertake because a significant proportion of the transactions will be undertaken within a hyperlocal space.

**22.**Additionally, by locating the meaning space of certain words within a hyperlocal space, the computational complexity of creating the semantic web can thus be reduced.

**23.** EP 2 267 980 A1 describes a proximity-triggered messaging system but it is based on a relative positioning method (as opposed to an absolute positioning method), does not suggest a specific precise circular shape to the proximal location and does not account for location enabled devices that may be connected to the internet without using a mobile network. It does not reference the possibility that the message may be semantically characterised. Neither is it a method for users to broadcast to other proximate users. In EP 2 267 980 A1 the broadcasting of messages is predominately from system to user. The localisation platform cannot be knowingly accessed by a user seeking to make a one-to-many broadcast at their initiative.

**24.** Our invention seeks to improve the above system in a number of ways. By using the more accurate GPS based absolute positioning method we allow a specific shape to the hyper-local broadcast region and one-to-many broadcasting is possible, and envisaged for the device users. Our invention is described herewith.

**25.**Thus the present invention of a system and method for a hyperlocal content distribution platform seeks to overcome the limitations of existing social network hyper-local discovery applications, hyperlocal content curation platforms and existing hyperlocal messaging applications by:
■ Allowing anonymous registrations to the service
■ Allowing both machine initiated and user-initiated activity
■ Allowing one-to-many broadcasts (broadcasts to all users) as well as one-to-one transmission of a particular content object
■ Allowing users/devices to add semantic tags to content objects before broadcast or have them automatically generated by the client
■ Allowing users/devices to define semantic tags that interest them
■ Allowing the system to perform semantic processing on the content objects as well, both before and after broadcast
■ Strictly enforcing the hyperlocal nature of the relationship between sender and receiver as either the user/device or the system defines the physical and temporal space in which the message is able to be received. This has the technical effect of ensuring that this combination of physical and temporal space must always constitute a hyperlocal space.
■ Allowing users/devices to create and broadcast to hyperlocal zones when they are both moving and stationary.
■ Allow users/devices to place themselves virtually in another physical location temporarily while still rigorously enforcing the hyperlocal nature of the broadcast mechanism.
■ Allowing users/devices to send hyperlocal content objects within the context of a virtual environment created by a computer system
■ Allowing users/devices to attempt to target their hyperlocal content object to one other distinct user of the system whom they can see even when they do not know who that person/device is.

**26.** The objective technical problem of the invention is to provide a method and system capable of limiting the accessibility of a content object issued by one device/user connected to the platform to another device/user which in turn gives rise to a real-world hyperlocal communication based on:
■ Their distance (geographical proximity) from the sender.
■ The time (temporality) the content object was sent
■ Their relative speed compared to the sender
■ Their temporal proximity to the sender
■ The semantic classification of the content object.
The technical problem of the present invention of widening the number of broadcast and direct message content objects that can be sent between users and internet-capable devices whilst still preserving the hyperlocality of those content objects is solved according to various technical implementations of the present teachings of the invention.

### Summary of the Invention

**27.** The following definitions relate to terms used in the summary of the invention, the preferred embodiments and the claims for the method and system in the current invention:
- The term **'broadcast'** means a transmission of the same content object from one device to many devices.
- The term **'direct messaging' or 'direct message'** means a transmission of the same content object from one unique device to another unique device. In the case of direct messaging the transmitted content object can either be private between sender and recipient devices, or public in that it could be discoverable through a search mechanism on the system or accessible to a third party recipient via another means but always through the platform system means.
- The term **'content object'** refers to a generic data object that can be customised to contain any kind of desired content. A non-exhaustive list of such content could be textual information, rich media content or computer code designed to be executed on the recipient device.
- The term **'semantically aware'** means that each content object has at least one metadata attribute defined for it where that metadata attribute is in the semantic graph of the content object referred to by the metadata attribute. The location of the metadata information for each content object is not fixed - it is shown to be held in various places in the embodiments. Also, the metadata is additional to the content object.
- The term **'valid geographic reception area'** is defined as the geographic area in which any content object that is broadcast or sent as a direct message is allowed to be accessed by any device connected to the platform.
- The term **'object time validity' or 'time validity variable'** refers to the time period during which the content object is able to be received within the valid reception area.
- The term **'internet-enabled device'** means any computing device which is connected to the internet and is capable of reliably communicating over an internet protocol network.
- The term **'hyperlocal'** refers to data or content oriented around a well-defined community where the information is specifically directed towards the population of that community.
- The term **'hyperlocally'** is the adjective form of hyperlocal
- The term **'hyperlocal zone'** refers to a region of time, space and content defined by a 'content object', the 'valid reception area' and 'object time validity' where the technical effect arising from the combination of these three variables results in a hyperlocal area.
- The term **'hyperlocal zone feel'** refers to the social, emotional and cultural thematic environment within a hyperlocal zone created by the plurality of all the hyperlocal activity in that hyperlocal zone.

**28.** The present invention relates to a method and system for a hyperlocal communication platform for internet-enabled devices to send and receive content objects via broadcast- or direct-messaging where each content object has a semantic categorisation within the system and each content object is only able to be accessed from hyperlocally proximate devices that are within the valid reception area during the time period set in the object time validity variable. Thus, the present invention relates to a method and system for proximity-based, temporally-limited one-to-many and one-to-one hyperlocal messaging of location- and semantically-aware content objects between internet-enabled devices according to claims 1 and 14. Preferred embodiments of the method and system are defined in the dependent claims.

**29.** Method for proximity-based, temporally-limited one-to-many and one-to-one hyperlocal messaging of location- and semantically-aware content objects between internet-enabled devices, **characterised in that** it comprises:
- Receiving from the hyperlocal broadcast platform, or having auto-generated from within the client application, or receiving from another client device connected to the platform:
   ■ the default content object structure,
   ■ the default time validity value,
   ■ the default valid geographic reception area details with accompanying default variables for that area type, and
   ■ the default content object semantic classification type calculated for that location,
- Constructing a content object using the client application or having one generated by the client application, the central platform or another device connected to the platform,
- Adding a semantic classification to the content object,
- Sending the content object from the client application to the hyperlocal platform server, or alternately directly to another client application along with:
   ■ semantic information (metadata attributes) for the object,
   ■ location of the device from where the message originated,
   ■ the valid reception area type and associated variables, if any, and
   ■ the time validity variable attached,
- Receiving of the content object and associated data at the destination,
- Storing the content object and associated data by creating an entry in a database, or alternatively in memory, on the hyperlocal platform server, or a client application, of the received content object and its associated data,
- Maintaining a constantly updated database of the location of all application clients connected to the platform server,
- Monitoring all the received objects for potential activation,
- Activating all the server-side content objects in accordance with their time validity variable,
- Calculating their valid geographic reception areas in accordance with the valid geographic reception type chosen and any variable required for that type,
- Determining the list of devices that fall within the valid geographic reception area at the time of activation of each content object (the said list constituting the broadcast list),
- Distributing each active content object and its semantic categorisation to all the devices that are on the broadcast list for that content object if it is a broadcast, or sending the content object and associated semantic data to a particular device in the case of a direct message,
- Deactivating an active content object in accordance with its time validity variable.

**30.** In an embodiment the method for proximity-based, temporally-limited one-to-many and one-to-one hyperlocal messaging of location- and semantically-aware content objects between internet-enabled devices comprises:
■ Opening the application to compose a content object for one-to-one or one-to-many distribution to recipients within a hyperlocal zone.
■ Receiving from the hyperlocal broadcast platform the default system content object structure, the default system generated time validity value, the default system generated valid geographic reception area details with accompanying default variables for that area type and the default content object semantic classification type calculated for that location.
■ Constructing a content object using the client application. This content object can be a text message with accompanying title, a static image, a video broadcast or some executable code that can be deployed in a runtime engine of the client operating system (these examples are non-exhaustive).
■ Adding a semantic classification to the content object at the time of composition using (a) a drop down list, or (b) a semantic analysis component that resides on the application, or (c) by the application sending a draft of the content object for analysis by the semantic engine on the server and where the server performs its semantic analysis and sends back options for the user to select in the user interface before the final submission of the content object to the platform.
■ Sending the content object from the application server to the hyperlocal platform server with the semantic information (metadata attributes), the location of the content object origin, the valid geographic reception area type with any associated defined variables, and the time validity variable attached.
■ Receiving the content object and associated data at the platform server.
■ Storing the content object by creating an entry in a database on the server of the received content object and its associated data, where the entry contains at least:
   - the content object,
   - associated semantic information (metadata attributes),
   - the location data of the device at the time of sending,
   - timestamp of when it was sent by the client,
   - timestamp of when it was received at the platform server,
   - valid reception area type and associated variables,
   - the time validity variable attached.
■ Maintaining an updated database of the location of all application clients connected to the platform server. Application clients can either be polled within a particular region or their location can be pushed from the device to the platform server. (Both techniques are made clear in the embodiments)
■ Monitoring using a scheduling engine all the received objects for potential activation but if the content object is for immediate broadcasting or messaging then it will be immediately passed to the content object controller mechanism as an activated content object.
■ Activating all the server side content objects in accordance with their time validity variable
■ Calculating their valid reception areas in accordance with the valid reception area type chosen and any variable required for that area type
■ Determining the list of devices that currently fall within the valid geographic reception area. This is the broadcast list.
■ Maintaining an alias list which matches devices to aliases such as previously established user identities to devices.
■ Publishing each active content object and its semantic categorisation to all the devices that are on the broadcast list for that content object if it is a broadcast, or sending the content object and associated semantic data to a particular device using the alias list in the case of a direct messaging communication.
■ Monitoring by means of the location data received at the central platform server whether a device has moved into/or out of the valid geographic reception area for a particular broadcast or direct message.
■ Where a device has moved into the valid geographic reception area of an active content object then the system controller will send the content object and associated data to the newly eligible device (or devices if this is done at a particular polling frequency)
■ Where a device has moved out of the valid reception area the system controller will sent a 'command' to the client device saying to no longer display, or allow access to a previously received content object in the message stream (or other user interface concept, or executable screen) on the device.
■ The client device depending on a number of factors that are outlined in the preferred embodiment can either receive its valid hyperlocal content objects and associated data via a push from the central server or via a pull based polling from the central server.
■ Displaying on the client device all the hyperlocal content objects sent through the platform that are valid for that particular time and space in its user interface.
■ Deciding whether to create a new content object changing/combining the content object due a rule set performed on the results of a semantic analysis of all the content objects activated or set for activation in a particular hyperlocal zone.

**31.** Every content object is assigned a valid reception area which is calculated by a method that always takes the sending location into account. The **valid reception area** of the content object must be assigned in at least one of the following ways:
■ (RADIUS) The content object can have a **distance** variable that describes the radius from the sender in which it is potentially accessible to any other user. This distance variable will be initially set by the system. The distance variable will be a function of the population density, time of day, historical usage patterns, building density and the number of other platform users within the location of the origin point of the message. The system will make the distance variable low in highly populated areas and make it higher in sparsely populated areas. Users will be potentially able to override this system generated distance variable by making an in-application payment or by accessing special privileges given temporarily to their user account in response to promotions or other marketing campaigns.
■ (LOCATION OBJECT) In place of a **distance** variable a content object could have its valid reception area mapped to a specific location object - for instance a large public venue like the Louvre museum or the Bellagio Casino, Las Vegas. Then the content object would be accessible only to those users who were in that location during the period defined in the time-validity variable for that content object.
■ (TRAVEL TIME) In place of either a distance variable, or a mapping to a specific location object the valid reception area could be defined in terms of travel time from the point of sending. The valid reception area could be defined in terms of 'x minutes drive' or 'z minutes walk' from the sending location. The system would calculate the valid reception area radius in metres by using a database which contained average speeds per method obtained by a historical analysis of data from that location.
■ (TRAVEL COST) In place of any of the above three ways of specifying the valid reception area, the valid reception area could also be defined in terms of the cost of a particular journey from the original point of sending. The valid reception area could be defined as "Within a taxi ride of less than x euros" or "a bus ride of less than z yen" from the sending location.
■ (SPHERICAL) The content object can have a **distance** variable that describes the spherical radius from the sender in which it is potentially accessible to any other user. This distance variable will be initially set by the system. The distance variable will be a function of the population density, time of day, historical usage patterns, building density and the number of other platform users within the location of the origin point of the message. This way of describing the valid geographic reception area will be useful for people seeking to send content objects above and below themselves.

**32.** In all embodiments a content object will also always have a **time validity** variable. This time validity variable will describe the time interval (usually starting from the time of broadcast) that the content object is potentially able to be accessed. The system-generated time validity variable will be a function of the population density, time of day, historical usage patterns, the number of other system users and the number of potentially receivable content objects at a particular location at the given time. The user will be able to override the system time validity variable by either completing an in application purchase or by a subscription model. However, in those cases the system will ensure that the content object does not have a time validity variable set that will negatively impact on the hyperlocal zone feel if it were set. In most preferred embodiments in urban environments the time validity variable will be measuring in minutes or hours, not days or weeks. In addition:
■ A content object could have a time validity variable set for a starting point in the near, or distant future, i.e. a local advertiser might want to pre-set a broadcast of a promotional nature.
■ A content object could have a repeating nature - it could be set to repeat daily, monthly, weekly or at any other interval if it was consistent with the zone feel within its valid reception area. A group that met regularly in the local community hall each Wednesday night could set up a content object that repeated weekly.
■ A content object could have a time validity variable that had the effect of the content object being activated in the near future and having a very long validity (in comparison to the mean time validity in that location) or even an indefinite end period. Such a content object would be known as a persistent content object. Persistent content objects would almost be certainly be allowed in a particular embodiment of the method to be set only by users who are a public or governmental authority. For example the broadcasting of a content object which has a message that a particular bridge is closed for a year.

**33.** In the preferred embodiment a content message will also have a **semantic** classification before it is broadcast. In one embodiment a user can select from a predefined list of categorisations when they are sending a content object or the hyperlocal platform server can introspect the content of the content object (before they commit to sending it) and assign a categorisation within a simple or complex semantic interest tree.
■ A Content Object will **always** consist of at least a headline and a text field, at least one metadata attribute and a meta-field description of the content contained in the object. It is this meta-field description of the content object that allows the broadcaster to customise the content object to include any and all information (content types) that the broadcaster wants to send.

**34.** The present system and method also allows for a one-to-many or one-to-one content object to be considered as **'static'** or **'dynamic'.**

**35.** In the embodiments, a static content object is one where the valid reception area does not change from the valid reception area value set when the content object is broadcast, even if the device and its user move from that point.

**36.** In another embodiment, a dynamic content object moves with its sender as they move which is a further novel aspect of our proposed method over any existing prior art. For example:
■ A user is travelling on a train. They send out a one-to-many content object that is intended to be meaningful to other passengers on the train who are using the system. The hyperlocal platform server ascertains that the user who sent the broadcast is moving (and in a way consistent with being on a train). The hyperlocal platform server continuously updates the location of the valid reception area as the sender of the content object moves either predictively or by continuously polling the moving device. The central hyperlocal platform server also notes that any other user on the train in addition to the sender is moving as well. In this example the method extends the concept of a hyper-local space to include a space that is moving.

**37.** The system for enabling proximity-based, temporally-limited, one-to-many and one-to-one hyperlocal messaging of location- and semantically-aware content objects between internet-enabled devices **characterised in that** it comprises:
- At least one internet capable device upon which an application client resides and where the application has the capability to have its location variable internally set or otherwise determined and where this device:
   ○ Maintains its location awareness,
   ○ Transmits its location when necessary,
   ○ Constructs and sends content objects with their associated variables,
   ○ Allows the semantic classification of content objects,
   ○ Receives all the messages that the device is allowed to access,
- At least one hyperlocal communication platform server where this server:
   ○ Provides location information to the client application where this is not provided or determined by the client device itself,
   ○ Tracks all of the applications resident on all of the client devices to which the platform could possibly communicate,
   ○ Provides to the client devices the default settings for a content object that is being composed for transmission at a particular hyperlocal zone,
   ○ Performs semantic analysis on content objects being composed for broadcast at a particular hyperlocal zone,
   ○ Receives content objects from the application with associated semantic metadata attributes and other data attached,
   ○ Stores content objects, their associated metadata and meta-fields,
   ○ Determines and monitors which devices are eligible to receive activated content objects,
   ○ Activates and de-activates content objects in accordance with their descriptive variables,
   ○ Distributes activated content objects to eligible client devices,
   ○ De-activates content objects residing on client devices via both publish and subscribe mechanisms,
   ○ Creates new content objects for distribution via semantic analysis of existing content objects within a hyperlocal zone in conjunction with a rule set existing within the platform, and
   ○ Has a semantic analyser engine.

**38.** In one embodiment the system for enabling proximity-based, temporally-limited, one-to-many and one-to-one hyperlocal messaging of location- and semantically-aware content objects between internet-aware devices comprises:
■ One or more internet capable device(s) upon which an application is installed and where the application has the capability to have its location variable internally set or otherwise determined. The application can be configured to have its location set (a) to be the actual location of the device upon which it is executing determined by an in-built absolute position determining capability in that device or (b) to be an estimation of the actual location of the device upon which it is executing determined by a relative positioning determining capability on the device or (c) by having its location manually entered either by coordinates or by reference to a map object or (d) by having its location set remotely from the central server, or
■ One or more internet capable computing devices containing a web browser when the client application functionality with respect to the device could also be provided from a server delivering content and executable code to the browser environment embedded on that device, where
   ■ The client device:
      ■ maintains its location awareness
      ■ transmits its location back to the central unit when necessary
      ■ composes and sends broadcast or direct content objects
      ■ allows the semantic classification of content objects to be sent
      ■ receives all the content objects that the device is allowed to access based on the system rules.
      ■ filters the content objects received before displaying
■ A hyperlocal communication platform server or central unit, to be deployed in a data centre within the geographic area of the hyperlocal zones that the server will provide functionality to all the client applications on the platform. The platform server:
   ■ provides location information to client application where this is not provided or determined by the client device itself
   ■ provides map data to the client application
   ■ tracks all of the application resident on the client devices to which it could possibly communicate
   ■ provides to the client devices the default settings for a content object that is being composed for broadcast at a particular hyperlocal zone
   ■ performs semantic analysis on content objects being composed for broadcast at a particular hyperlocal zone
   ■ receives the content object from the client application with associated semantic metadata attributes and other data attached
   ■ stores the message and its associated metadata and meta-fields
   ■ has a scheduling engine that ensures that content objects are appropriately activated for broadcast or sending
   ■ translates into physical co-ordinates the valid reception area
   ■ determines and monitors which devices are eligible to receive the activated content objects
   ■ de-activates content objects in accordance with their descriptive variables
   ■ maintains identities via means of an alias list for each client application
   ■ publishes activated content objects to the eligible client devices or responding to polling requests for the same from client devices
   ■ de-activates content objects on client devices via both publish and subscribe mechanisms, creates new content objects for broadcast
   ■ has a semantic analyser engine
   ■ sends system created new content objects to a hyperlocal zone by using a rule set and the results of the semantic analysis performed on two or more content objects

**39.** In another embodiment the present invention is composed of:
■ An application that is downloaded from the central server over the internet, or otherwise installed on a device that is internet-capable and where the application has the capability to have its location variable internally set or otherwise determined. The application can be configured to have its location set (a) to be the actual location of the device upon which it is executing determined by an in-built absolute position determining capability in that device or (b) to be an estimation of the actual location of the device upon which it is executing determined by a relative positioning determining capability on the device or (c) by having its location manually entered either by coordinates or by reference to a map object or (d) by having its location set remotely from the central server. This application will interact with the central server unit securely over the internet. The functionality provided by this application with respect to the device could also be provided from a centralised server delivering content and executable code to the browser environment embedded on that device (in the case where a specific standalone application is not available to be installed). This application is responsible for maintaining its location awareness, transmitting its location back to the central unit when necessary, for composing and sending broadcast or direct messages, for allowing the semantic classification of content objects to be sent and for receiving and displaying all the content objects that the device is allowed to access based on the system rules.
■ A hyperlocal communication platform server or central unit, to be deployed in a data centre within the geographic area of the hyperlocal zones that the server will provide functionality to all the client applications on the platform. The main functions of this server are: to provide location information to client application where this is not provided or determined by the client device itself, to provide map data to the client application, to keep track of which the applications resident on the client devices communicate, to provide to the client devices the default settings for a content object that is being composed for broadcast at a particular hyperlocal zone, performing semantic analysis on content objects being composed for broadcast at a particular hyperlocal zone, receiving the content object from the client application with associated semantic metadata attributes and other data attached, storing the message, via means of a scheduling ensure that content objects are appropriately activated for broadcast or sending, translating into physical co-ordinates the valid reception area, determining and monitoring which devices are eligible to receive the activated content objects, de-activating content objects in accordance with their descriptive variables, maintaining identities via means of an alias list for each client application, publishing activated content objects to the eligible client devices or responding to polling requests for the same from client devices, de-activating content objects on client devices via both publish and subscribe mechanisms and creating new content objects for broadcast or sending to a hyperlocal zone by using a rule set on the semantic analysis of 2 or more content objects activated or set for activation in that hyperlocal zone.

**40.** Thus, the present invention has the technical effect of limiting the accessibility of a content object issued by one device connected to the platform to another device connected to the platform which in turn gives rise to a real-world hyperlocal communication based on:
■ Their distance (geographical proximity) from the sender.
■ The time (temporality) the content object was sent
■ Their relative speed compared to the sender
■ Their temporal proximity to the sender
■ The semantic classification of the content object

**41.** Furthermore, the present invention has the technical effect of widening the number of broadcast and direct message content objects that can be sent between users and internet-capable devices whilst still preserving the hyperlocality of those content objects.

### Detailed description of the preferred embodiments

**42.** In the preferred embodiment the system is composed of at least one or more client devices and a central hyperlocal platform server to which all of the client devices are capable of connecting to via the internet.

**43.** The client devices can be operated by a user who creates and distributes content objects, or they can be autonomous computing devices that have been pre-programmed to send and receive content objects.

**44.** In the case where the client device is operated by a user the device needs to be internet-enabled and capable of broadcasting and receiving content objects from the server. In this case of a user operated device this is, at present, most likely to be a smartphone or tablet like an Apple iOS device or Android device. These devices are capable of knowing their location by means of GPS or they can have their location set by a central server. In addition this class of devices has enough computing power to have sophisticated computing components like semantic analysing engines deployed on the client device.

**45.** In addition a considerable number of smartphones and tablets contain accelerometers, cameras and gyroscopes, which in conjunction with location information allow the device to interpret and classify objects, images and visual panoramas that it captures using the inbuilt camera. A good example of this is a tourist application whereby the user holds up their smartphone or tablet and points it at a group of buildings. The application then presents historical information about the buildings based on an analysis of the position of the device and direction the smart device is oriented towards.

**46.** In the preferred embodiment a user with a smartphone or tablet device is standing still in a particular location. For the purposes of illustrating the preferred embodiment the user is standing in the middle of the Jardin du Luxembourg (a public garden) in Paris. A number of other users with internet enabled smartphones, tablets or other computing devices are also in the garden. They are running the client application on their devices as well.

**47.** In the preferred embodiment a user decides to send a hyperlocal one-to-many content object to the other users of the client application within the proximate geographical area asking if anyone knows if there is a shop in the gardens where they can buy a particular item.

**48.** In the preferred embodiment, the user initiates the application by clicking on the icon on the screen of their device. The user has previously downloaded the application from an application store applicable for their device, or the user has installed the application directly onto their device.

**49.** In another embodiment where the application ecosystem and security controls of the device have prevented an application being deployed via download from an application store, or otherwise installed on the device, then all of the application functionality can be delivered by a browser delivering content from the hyperlocal platform server, or another specialised server used for delivering just such content to the device. This method may need to be employed in the case of the Apple iOS ecosystem because the operator of the hyperlocal platform may not want to enter Apple's revenue sharing or other contractual arrangements.

**50.** In the preferred embodiment after having launched the application on their client device, the client device first checks to see whether it can obtain a location signal via a satellite based method. In this explanatory case the device can obtain such a signal.

**51.** In another embodiment where the client device cannot obtain a location signal via a satellite based method the client device contacts the platform server and the server estimates the location of the device based on analysis of the IP network data generated by the localisation message of the client to the server.

**52.** In another embodiment where the client device cannot obtain a location signal via any other method the server can estimate the location of the device based on its last known location and transmit that information to the client device.

**53.** In one embodiment after the client device has determined its location the client then receives map information from the platform server and this information is displayed in the user interface of the device so the user can have a greater understanding of the proximate geographic area when constructing the content object and deciding whether to override the system generated variables that would govern the nature of the content object. Such map information is normally accessed by the platform server itself as a web service from a commercial provider.

**54.** In the preferred embodiment before the user starts to construct the content object the client device receives a number of variables from the hyperlocal platform server related to how the content object might behave.

**55.** The hyperlocal platform determines - based on a number of factors including but not limited to, population density, building density, time of day, date and historical analysis - the default content object type for that particular proximate geographic area.

**56.** In the illustrative example of the preferred embodiment, being the garden at Jardin du Luxembourg, most users send simple textual based messages when in that environment.

**57.** In other embodiments, the hyperlocal platform server tells the client device that at that location the default content type is a text message plus a photo, or a video with a heading, or a streaming audio/video file.

**58.** In the other embodiments, the client device may also receive this information from other proximate client devices. The proximity of these devices can be determined by interrogating client devices on the same WiFi or WiMax network, for instance. Or by the client device keeping its own internal list of the IP addresses previously received from the server of client devices that were known to be in that location recently.

**59.** In the preferred embodiment the client device also receives - in addition to the default type of content object - the default variables that determine the hyperlocal nature of the content object at that proximate geographic location.

**60.**In the preferred embodiment the hyperlocal platform determines based on a number of factors including but not limited to, population density, building density, time of day, date and historical analysis the other default variables for that location and transmits them to the client.

**61.** In the preferred embodiment before they have composed the content object the user is thus presented with: the type of content object they are likely to send (the default content object type for that location), how they wish to set where the content object might be distributed (the valid geographic reception area), how long they want the content object to last for (the time validity variable) and what is the general nature of the content in the content objects for content object types at that area (the default semantic classification for that location).

**62.** In the illustrative example of the preferred embodiment under consideration the user in the Jardin du Luxembourg is presented with this information in the user interface on their client device being that they are likely to send a simple text message with a title as the content object, that they are likely to want to send it in a simple circular area with a radius of 500 metres around them, and they wish the message to last for just 20 minutes.

**63.** In other embodiments if the user is in, for example a cruise ship or building they could be presented with other default information such as that the default valid geographical reception type is spherical because most users at that location want to cast their content to other users or devices on floors above and below them. In addition, the hyperlocal platform calculates the default size of the sphere based on information about the proximate geographic area such as known population density in the building or historical analysis of content objects transmitted to, or received at that location.

**64.** Similarly, in other embodiments if the user is in a well-defined place on a map like the Louvre museum in Paris the default valid geographic area reception type presented to the client device would be the map location object 'the Louvre' based on based on information about the proximate geographic area such as that most users at that location are gathered for a similar purpose (in this case visiting the Louvre) or historical analysis of content objects transmitter to, or received at that location.

**65.** Similarly, in other embodiments if the user is, for instance standing near the Arc de Triomphe in Paris the default valid geographic reception area type presented to the client device might be in terms of travel time from that location (users might typically send content objects from that location asking where the best other tourist attractions are within a particular walking time for instance). And with the system knowing that most users at that location travel twenty minutes after such a transmission. Similarly, in another embodiment the default information presented to a user located at the Arc de Triomphe could be specified by the means of travel cost from that location.

**66.** In the preferred and other embodiments, the default time validity variable is also presented to the client device before the content object is constructed.

**67.** In the preferred embodiment example under consideration this time validity variable is constructed by examining the historical data of content objects broadcast or transmitted to that location, content objects received at that location, the population density at that location, the date, the time and the number of other platform users at that location (this is not an exhaustive list). In this case the hyperlocal platform server determines that 20 minutes is the time validity variable. In the case of a user transmitting a content object in a much more sparsely populated area, or in the middle of the night the time validity variable would be expected to be longer all other things being equal.

**68.** In the preferred embodiment the hyperlocal platform, once again by examining historical data, and by a set of rules determined over time for different content types, locations, valid geographic reception area types and different time variables will present to the client device a default categorisation. For the example under consideration this could be that the broadcast is likely to be 'a request' or 'general chat'.

**69.** In all the embodiments the simplest forms of categorisation will be terms like:
■ information / news
■ alert / danger / warning
■ chat / general broadcasts
■ meet up & interact
■ ad / commercial offer
■ event / happening
■ help
■ buy / sell / bid / rent / borrow
■ age restricted content
■ flirt
■ other
(but not limited to the above categorisations).

**70.** In all of these embodiments, where the hyperlocal platform is unavailable the client device will attempt to get the information it uses to pre-populate the information about the default content object structure, the default time validity variable, the default valid geographic area details (and associated variables) and the default content object semantic classification type from other proximate client devices. The proximity of these devices can be determined by interrogating client devices on the same WiFi or WiMax network for instance, or by the client device keeping its own internal list of the IP addresses previously received from the server of client devices that were known to be in that proximate geographic location recently.

**71.** In the preferred embodiment the user is now ready to construct their content object. In this case they construct a simple message in textual form in the form of a question "Does anyone know if there is a shop open in the garden to get a bottle of water" with an associated title "Shop open?". They are presented with the default variables in the user interface and they decide not to alter them.

**72.** In other embodiments the user can alter the hyperlocal platform generated default variables. The user may need to pay to alter these variables via means of an in application purchase or by an ongoing subscription to premium features of the platform.

**73.** In all embodiments the platform server will assess whether or not that the desired alteration of the variables by the client device is permissible in that it does not cause the hyperlocal zone feel of that location to be effected in such a way that causes the overall utility of the hyperlocal messaging system under consideration to be reduced.

**74.** In the preferred embodiment after constructing their content object and deciding to stay with the hyperlocal platform generated default variables, the user transmits the content object by pressing send, or shaking the smartphone/tablet or by deploying another method of causing user interface confirmation in smart devices.

**75.** The content object and accompanying information is sent to the hyperlocal platform server via means of the internet. Where the hyperlocal platform server is found to be unavailable the client device attempts to send the information to any proximate client devices that it may know about via previously received information.

**76.** In the preferred embodiment the hyperlocal platform receives the content object and associated information and then stores it (either temporarily or persistently).

**77.** In the preferred embodiment the time validity variable is set for immediate broadcast i.e. the start time of the time validity variable is the same as the time of transmission from the client device.

**78.** The platform server then translates the valid geographic reception area and associated variables into a set of well specified geographic co-ordinates. In the current example the platform server takes the location of the client device at the time of sending, the fact the valid geographic reception area is defined as a radius as well as the length of the radius and translates that by means of a commercially available Graphical Information System (GIS) server component into precise co-ordinates.

**79.** In the embodiment where the area is defined by means of a location object on a map the platform server calculates the well specified geographic co-ordinates by also taking into account information gained from the map information web service.

**80.** Similarly, in the embodiments where the reception area is a sphere the calculation is performed similarly to the method in 78. Where it is defined in terms of travel time or cost it consults a database of variables held in the hyperlocal platform server.

**81.** In the preferred embodiment after making the calculation of the well specified geographic co-ordinates of the valid reception area, and as this is a broadcast message the system broadcasts the content objects to all client devices eligible to receive the content object based on their location.

**82.** In the preferred embodiment the hyperlocal platform server determines and monitors which devices are eligible to receive the content objects by either consulting its previously existing list of device locations that is reasonably current, by polling before broadcast all the devices that it might predict to be in that area, or by calculating device locations by estimating where devices may be based on their last known movement pattern.

**83.** In the preferred embodiment the hyperlocal platform server de-activates content objects in accordance with their descriptive variables. It does this by means of a controller which monitors the time validity variable of each content object.

**84.** In the preferred embodiment the hyperlocal platform server maintains identities via means of an alias list for each client device.

**85.** The hyperlocal platform server de-activates content objects on client devices via both publish and subscribe mechanisms.

**86.** The hyperlocal platform server creates new content objects to be transmitted within a hyperlocal zone by using a rule set and the results of the semantic analysis performed on two or more content objects

**87.** In the preferred embodiment whilst the description above shows the case of a user generated content object, a device is able to enter into exactly the same pattern of creating and sending a content object. This device can either be a smartphone or tablet or could be a purpose built hardware object (but that can still have all the properties described as necessary for the present invention). This is likely for instance in the case of a very low cost specific purpose computing device created for transmitting persistent content objects as a broadcast or direct message.

**88.** All of the examples so far are of static content objects - content objects that operate only in the valid geographic reception area initially defined by the system when they were broadcast or direct messaged.

**89.** In the preferred embodiment dynamic content objects are content objects where the valid geographic reception area to which they are correlated follows their user's location during the life of the content object. The paradigmatic illustrative example of this embodiment is:
A user is on the high speed train from Tokyo to Sendai to watch their favourite baseball team The Mighty Eagles at their home stadium. The user wants to meet up with other fans to talk about their favourite team. The user sends out a content object - the default valid geographic reception area type is set as a circle and the default radius is calculated at 400 metres. The hyperlocal platform server recognises the user is moving and polls their location regularly (or predicts their location - this software development toolkit is commercially available and in general release) and dynamically adjusts the location of the content object. This way the content object always remains relevant in a hyperlocal sense. The other hyperlocal platform users on the train are also predictively shown as moving so the content object is persistent in the user interface on their devices.

**90.**In the preferred embodiment it is also possible for a user to attempt to target their hyperlocal content object to one other distinct user of the system whom they can see even when they do not know who that person/device is.

**91.** In this case in the preferred embodiment, the user of a client device would hold up their client device so that the camera captures the scene they are looking at and the scene is displayed on the display of the device (in exactly the same way the a tourist uses an augmented reality application to get tourist information about new places). Then the user by means of touching, or pinching, or marking with a stylus or otherwise marking out on the touch sensitive display of that device selects an area in which a device or human is apparently present.

**92.** The user then attempts to send a content object message whose sole recipient should be the device or human marked out in the display. The user would select the message type in the user interface called 'laser message' (so called because the user is trying to target a person with an imaginary laser beam). The user does not necessarily know the person or even whether the person is another user of the hyperlocal messaging platform server under consideration. The hyperlocal platform server would receive (in addition to the information sent in conjunction with all content objects) the following additional information from the client device in this instance:
- Information from the gyroscopes within the device
- The information concerning the area of the screen selected by the user
- Information from the camera contained within the device about the settings at the time of area selection
- The actual photo from the camera at the time of area selection.

**93.** The hyperlocal platform server would then take all the information described in section 92 and define an area of five metres by five metres by five metres (or an even lesser cubic area) that attempts to correspond to the precise geographic area of the object (person) that the user selected in the touch screen display on their device. The hyperlocal platform server would then make a broadcast to that area of the content object. It would be hoped that the target recipient of the content object would be a fellow user of the hyperlocal messaging server and as such would receive the content object if the geo-locating calculations were correct.

**94.** Other aspects of the preferred embodiment are also described in section 30,31,32,33,34,35,36,38,39

**95.** While certain aspects of the method and system for proximity-based, temporally-limited one-to-many and one-to-one hyperlocal messaging of location- and semantically-aware content objects between internet-enabled devices are presented below in certain claim forms, the inventors contemplate the various aspects of the methodology in any number of claim forms. Accordingly, the inventors reserve the right to add additional claims after filing the application to pursue such additional claim forms of the described systems and methods.

**96.** It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination. Although the invention has been described in conjunction with specific embodiments thereof, it is evident that many alternatives, modifications and variations will be apparent to those skilled in the art. Accordingly, it is intended to embrace all such alternatives, modifications and variations that fall within the appended claims.

## Claims

1. Method for proximity-based, temporally-limited one-to-many and one-to-one hyperlocal messaging of location- and semantically-aware content objects between internet-enabled devices, **characterised in that** it comprises:
• Receiving from the hyperlocal broadcast platform, or having auto-generated from within the client application, or receiving from another client device connected to the platform:
■ the default content object structure,
■ the default time validity value,
■ the default valid geographic reception area details with accompanying default variables for that area type, and
■ the default content object semantic classification type calculated for that location,
• Constructing a content object using the client application or having one generated by the client application, the central platform or another device connected to the platform,
• Adding a semantic classification to the content object,
• Sending the content object from the client application to the hyperlocal platform server, or alternately directly to another client application along with:
■ semantic information (metadata attributes) for the object,
■ location of the device from where the content object originated,
■ the valid reception area type and associated variables, if any, and
■ the time validity variable attached,
• Receiving of the content object and associated data at the destination,
• Storing the content object and associated data by creating an entry in a database, or alternatively in memory, on the hyperlocal platform server, or a client application, of the received content object and its associated data,
• Maintaining a constantly updated database of the location of all application clients connected to the platform server,
• Monitoring all the received objects for potential activation,
• Activating all the server-side content objects in accordance with their time validity variable,
• Calculating their valid geographic reception areas in accordance with the valid geographic reception type chosen and any variable required for that type,
• Determining the list of devices that fall within the valid geographic reception area at the time of activation of each content object (the said list constituting the broadcast list),
• Distributing each active content object and its semantic categorisation to all the devices that are on the broadcast list for that content object if it is a broadcast, or sending the content object and associated semantic data to a particular device in the case of a direct message,
• Deactivating an active content object in accordance with its time validity variable.

2. Method according to claim 1, wherein the semantic classification is added to the content object by any of the following means:
• A drop down list generated by the client application containing pre-defined semantic category headings, or by on-the-fly generated category headings,
• A semantic analysis engine that resides on the client application,
• Semantic analysis performed on the hyperlocal server platform on a draft of the content object being constructed, which is then submitted back to the device for the user or device to review and affirm,
• A semantic analysis engine residing on another client device that forms part of the platform.

3. Method according to Claim 1 and 2 where the client application is either:
• Launched manually by a user causing the application to be initiated, or
• Launched by a system triggered event on the internet-enabled client device where the application resides, or,
• Launched by a system triggered event where the trigger is generated and transmitted on another client or server device that forms part of the platform

4. Method according to any of the previous claims where the valid geographic reception area is described in one of the following ways:
• The valid geographic reception area of a content object is described as a circle of radius R from the sending location,
• The valid geographic reception area of a content object is described by reference to a location object that has a generally accepted meaning on a map,
• The valid geographic reception area of a content object is described in terms of travel time from the sending location,
• The valid geographic reception area of a content object is described in terms of travel cost from the sending location,
• The valid geographic reception area of a content object is described in terms of a sphere of spherical radius R from the sending location.

5. Method according to any of claims 1 to 4, where the valid geographic reception area seeks to encapsulate the proximate geographic area to one person, then the valid geographical reception area of a content object is defined by the selection of a relevant area on a user interface of a sending device where the device has the ability to display augmented reality content via means of an augmented reality overlay, and then translating this relevant area into a valid geographic reception area with accompanying variables by means of information derived from accelerometers, gyroscopes and other positioning and movement detection devices in a client device and/or other devices in the proximate geographical area.

6. Method according to any of the previous claims where a time validity variable for a content object is defined in at least one of the following ways:
• As an interval of continuous time described by two discrete times, or
• As a repeating interval of time described by two discrete times and a variable describing the period of repetition.

7. Method according to claims 1 through 3 where the valid geographic reception area is described in one of the following ways:
• The valid geographic reception area of a content object is described as a circle of radius R from the sending location,
• The valid geographic reception area of a content object is described by reference to a location object that has a generally accepted meaning on a map,
• The valid geographic reception area of a content object is described in terms of travel time from the sending location,
• The valid geographic reception area of a content object is described in terms of travel cost from the sending location,
• The valid geographic reception area of a content object is described in terms of a sphere of spherical radius R from the sending location,
and where all of the calculations and positions refer to points within a space created by a computer program for the purposes of making a game or virtual world.

8. Method according to any of the previous claims where content objects according to their valid geographic reception area and time validity variables are:
• Deactivated by the hyperlocal platform in accordance with their variables, or,
• Deactivated by the application client in accordance with their variables, or,
• Deactivated by another application client forming part of the platform in accordance with their variables.

9. Method according to any of the previous claims where content objects are either static or dynamic, in the case where content objects are static then the location of sending of the content object does not change over the life of the content object, and if content objects are dynamic then the location of the origin of the content object is continuously updated by a hyperlocal platform server, or a client application, to ensure that the valid geographic reception area is recalculated to continuously reflect the fact of the sender's new location during the time described by the time validity variable.

10. Method according to any of the previous claims where a content object can change its status from static to dynamic, or vice versa during the time it is active.

11. Method according to any of the previous claims where:
• A device has moved into the valid geographic reception area of an active content object then the hyperlocal platform server will transmit the content object to the newly eligible device, or,
• Where a device has moved into the valid reception area of an active content object then the device will interrogate the server asking for an updated list of all active content objects that it is eligible to receive, or,
• Where a device has moved into the valid reception area of an active content object then the device will communicate with other client devices within the geographically proximate area to initiate the reception of new content.

12. Method according to any of the previous claims whereby either:
• The client analyses one or more active, or recently deactivated content objects with its semantic analysing engine, or,
• The server analyses one or more active, or recently deactivated content objects with its semantic analysing engine, or
• Another client device in the hyperlocal area analyses one of more active, or recently inactive content objects with its semantic analysing engine, and,
by performing a rule-based calculation on the results of that analysis a client device, or the hyperlocal server platform generates a new content object for transmission where that content object has content that is pertinent to the other users of that hyperlocal zone.

13. Method according to any of the previous claims where a device has moved out of the valid geographic reception area of a still activated content object the platform server, or the client device, or another device connected to the hyperlocal messaging platform will send a command to the device so that the device no longer displays the content object in its graphical user interface, or allow that content object to be otherwise accessed on the client device.

14. The system for enabling proximity-based, temporally-limited, one-to-many and one-to-one hyperlocal messaging of location- and semantically-aware content objects between internet-enabled devices **characterised in that** it comprises:
• At least one internet capable device upon which an application client resides and where the application has the capability to have its location variable internally set or otherwise determined and where this device:
○ Maintains its location awareness,
○ Transmits its location when necessary,
○ Constructs and sends content objects with their associated variables,
○ Allows the semantic classification of content objects,
○ Receives all the content objects that the device is allowed to access,
• At least one hyperlocal communication platform server where this server:
○ Provides location information to the client application where this is not provided or determined by the client device itself,
○ Tracks all of the applications resident on all of the client devices to which the platform could possibly communicate,
○ Provides to the client devices the default settings for a content object that is being composed for transmission at a particular hyperlocal zone,
○ Performs semantic analysis on content objects being composed for broadcast at a particular hyperlocal zone,
○ Receives content objects from the application with associated semantic metadata attributes and other data attached,
○ Stores content objects, their associated metadata and meta-fields,
○ Determines and monitors which devices are eligible to receive activated content objects,
○ Activates and de-activates content objects in accordance with their descriptive variables,
○ Distributes activated content objects to eligible client devices,
○ De-activates content objects residing on client devices via both publish and subscribe mechanisms,
○ Creates new content objects for distribution via semantic analysis of existing content objects within a hyperlocal zone in conjunction with a rule set existing within the platform, and
○ Has a semantic analyser engine.

15. System according to claim 14 where the platform server activates said content objects by means of a scheduling engine.

16. System according to claim 14-15, wherein the application client has its location set as either:
• The actual location of the device upon which it is executing determined by an in-built absolute position determining capability in that device, or
• An estimation of the actual location of the device upon which it is executing determined by a relative positioning determining capability on the device, or,
• By having its location manually entered either by coordinates or by reference to a map object, or,
• By having its location set remotely from the central server or another client device in the proximate geographic area.

17. System according to any of claims 14-16 in which the client application is configured to translate into physical co-ordinates the valid geographic reception area of any content object that has a correctly specified valid geographic reception area type and associated variables.

18. System according to any of the claims 14-17 in which the platform server is further configured to provide map data to the client application to assist the user in setting the associated variables for a content object.

19. System according to any of the claims 14-18 in which the platform server is further configured to maintain user identities via means of an alias list for each application client.

20. System according to any of the claims 14-19 in which the platform server is configured to track the location of all the client devices connected to it by means of:
• Regular polling of all, or a subset of client devices, or,
• Receiving location information pushed from client devices, or,
• Receiving information relating to the changes in location from client devices.

21. System according to any of claims 14 to 20, wherein either the client application, or the platform server creates and sends new content objects to a pre-existing hyperlocal zone by using a rule set and the results of the semantic analysis performed on two or more content objects.
